# EUROPEAN PATENT SPECIFICATION

(11) **EP 4 274 050 B1**
(45) Date of publication and mention of the grant of the patent: **17.06.2026**
(21) Application number: 21914233.8
(22) Date of filing: 27.12.2021
(51) Int. Cl.: H02M 3/335, H02M 1/00, H02J 7/42, H02J 7/90, H02J 7/00

(54) **CHARGER**
LADEGERÄT
CHARGEUR

(30) Priority: 31.12.2020 CN 202011627315
(43) Date of publication of application: 08.11.2023
(73) Proprietor: Vivo Mobile Communication Co., Ltd., Dongguan, Guangdong 523863 (CN)
(72) Inventor: LI, Dahuan, Dongguan, Guangdong 523863 (CN)
(74) Representative: Murgitroyd & Company
(86) International application number: PCT/CN2021/141518
(87) International publication number: WO 2022/143496

(56) References cited:
- CN-A- 102 624 245
- CN-A- 106 208 401
- CN-A- 108 429 356
- CN-A- 109 995 242
- CN-A- 110 401 354
- CN-A- 112 821 482
- CN-A- 112 821 483
- CN-Y- 200 966 023
- JP-A- 2018 148 663
- US-A- 5 559 684
- US-A1- 2005 068 792
- US-A1- 2018 262 116
- US-A1- 2020 076 314
- US-B2- 8 009 448

## Description

### TECHNICAL FIELD

This invention relates to the technical field of electronic products, and in particular, to a charger.

### BACKGROUND

With the development of fast charging technologies, a multi-battery series charging technology and a half-voltage charging technology have gradually become main directions of existing charging technologies. For example, a charging detection voltage of an electronic device such as a mobile phone is 5V. This requires that a default output voltage of a charger should also be 5V, but a fast charging technology requires the charger to have a very high output voltage, for example, 10V or 20V. The output voltage may even reach 30V, 40V, or the like. However, existing chargers mainly use a power adjustment manner combining a flyback technology and a protocol control technology. This manner has a problem that charging efficiency is low.

Document US 8009448 B2 discloses a forward-flyback converter with active-clamp circuit. The secondary side of the proposed converter is of center-tapped configuration to integrate a forward circuit and a flyback circuit. The flyback sub-circuit operating continuous conduction mode is employed to directly transfer the reset energy of the transformer to the output load. The forward sub-circuit operating discontinuous conduction mode can correspondingly adjust the duty ratio with the output load change. Under the heavy load condition, the mechanism of active-clamp flyback sub-circuit can provide sufficient resonant current to facilitate the parasitic capacitance of the switches to be discharged to zero.

Document US 2020076314 A1 discloses a power supply apparatus having a current resonance circuit includes a charge unit connected to a primary winding of a transformer, and storing electric charge, and a connection unit connected in series with the charge, and a connection unit connected in series with the charge unit, and configured to switch the charge unit between a connecting state in which one of charging and discharging is enable.

Document US 5559684 A discloses a switching regulator composed of a push-pull converter with a buck or boost regulator connected upstream. The output inductance of the regulator is split into two separate inductances each of which is fed to one leg of the push-pull circuit. The push-pull converter is expanded to a resonance converter by means of resonance capacitors. This switching regulator has a high efficiency and is particularly suitable for use in satellite power supplies.

Document CN 110401354 A discloses a new energy vehicle GaN half-bridge LLC charging module, including the input rectifier module and GaN half-LLC bridge converter module, the input rectifier module output high-voltage bus Vbus line and low-voltage bus Vgnd into the GaN half-bridge LLC converter module for DCZDC converter, to get the output high-voltage bus Vout+ and the output low-voltage bus Vout-.

### SUMMARY

Embodiments of the invention provide a charger, to resolve a problem of low charging efficiency caused by a power adjustment manner of an existing charger.

To resolve the foregoing technical problem, this invention is implemented as follows.

The invention is defined by a charger with the technical features of independent claim 1

Further advantageous embodiments of the present invention are indicated in the dependent claims. It is to be understood that both the foregoing general description and the following detailed description are exemplary only, and are not restrictive of the present invention, whose scope is only limited by the appended claims.

### BRIEF DESCRIPTION OF DRAWINGS

FIG. 1 is a first schematic diagram of a circuit structure of a charger according to an embodiment which does not fall within the claimed scope but is kept in this description because of illustrative purposes;
FIG. 2 is a second schematic diagram of a circuit structure of a charger according to an embodiment which does not fall within the claimed scope but is kept in this description because of illustrative purposes;
FIG. 3 is a third schematic diagram of a circuit structure of a charger according to an embodiment of this invention;
FIG. 4 is a fourth schematic diagram of a circuit structure of a charger according to an embodiment of this invention; and
FIG. 5 is a fifth schematic diagram of a circuit structure of a charger according to an embodiment of this invention.

### DESCRIPTION OF EMBODIMENTS

Example embodiments disclosed in this patent specification will be described below in further detail with reference to the accompanying drawings. Although the example embodiments are illustrated in the accompanying drawings, it should be understood that this invention may be implemented in various forms without being limited to the embodiments described herein. On the contrary, these embodiments are provided to help more thoroughly understand this application and to fully convey the scope of this invention to those skilled in the art, scope which is only limited by the appended claims.

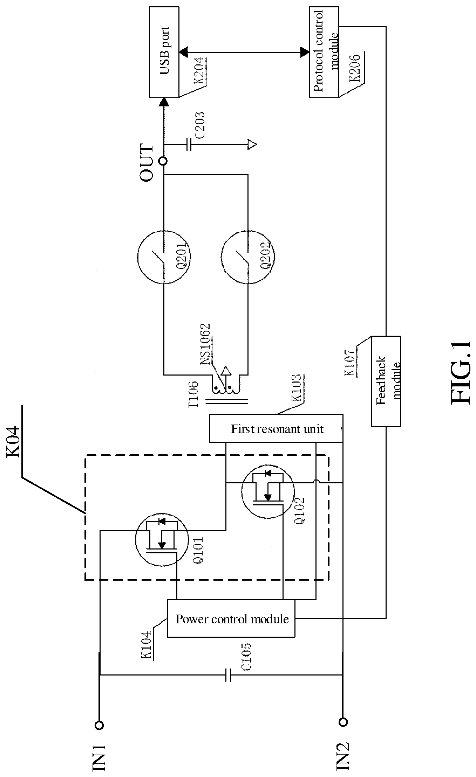

As shown in FIG. 1, an embodiment in this specification which does not fall within the claimed scope but is kept in this description because of illustrative purposes, provides a charger, including:
a first power input terminal IN1, a second power input terminal IN2, a power output terminal OUT, a switching module K04, and a transformer T106.

The switching module K04 is separately connected to the first power input terminal IN1 and the second power input terminal IN2. A primary side of the transformer T106 is provided with a first resonant unit K103. The first resonant unit K103 is connected to the switching module K04. A secondary-side winding NS1062 of the transformer T106 is connected to the power output terminal OUT.

The switching module K04 can switch between a first on state and a second on state. When the switching module K04 is in the first on state, input power at the first power input terminal IN1 is coupled to the secondary-side winding NS 1062 through the first resonant unit K103 and is output through the power output terminal OUT. When the switching module K04 is in the second on state, power discharged by the first resonant unit K103 is transmitted to the first power input terminal IN1 through the second power input terminal IN2.

For example, when the switching module K04 is in the first on state, an energy storage element in the first resonant unit K103 is in a charging state, and a flow direction of a current between the first power input terminal IN1 and the second power input terminal IN2 is: from the first power input terminal IN1 to the first resonant unit K103 and the second power input terminal IN2 sequentially; or when the switching module K04 is in the second on state, the energy storage element in the first resonant unit K103 is in a discharging state, and a flow direction of a current is: from the first resonant unit K103 to the second power input terminal IN2 and the first power input terminal IN1 sequentially.

In this way, a resonant topology can be formed in a charging circuit by alternately switching the switching module K04 between the first on state and the second on state. This can reduce loss and improve charging efficiency.

Optionally, the switching module K04 includes a first switch unit Q101 and a second switch unit Q102.

A first terminal of the first switch unit Q101 is connected to the first power input terminal IN1. A second terminal of the first switch unit Q101 is separately connected to a first terminal of the second switch unit Q102 and a first terminal of the first resonant unit K103. Both a second terminal of the second switch unit Q102 and a second terminal of the first resonant unit K103 are connected to the second power input terminal IN2.

When the switching module K04 is in the first on state, the first switch unit Q101 is in an on state, and the second switch unit Q102 is in an off state; or when the switching module K04 is in the second on state, the first switch unit Q101 is in an off state, and the second switch unit Q102 is in an on state.

In this embodiment, Q101 and Q102 constitute a half-bridge control switch, so that an entire architecture can constitute a resonant half-bridge topology in a case that Q101 and Q102 are controlled to be switched on and off alternately, thereby realizing efficient electric energy conversion.

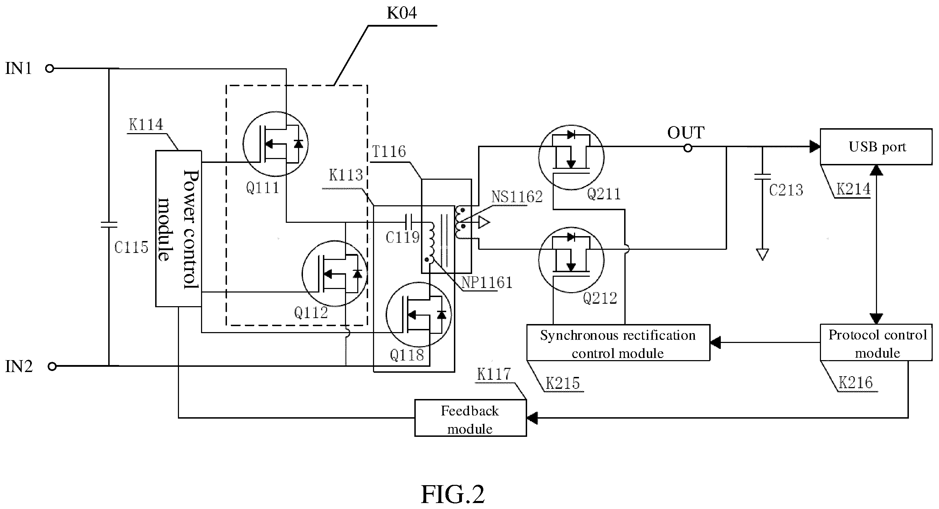

As shown in FIG. 2, whose disclosure does not fall within the claimed scope but is kept in this description because of illustrative purposes, the first resonant unit K113 may include a first primary-side winding NP1161 and a first capacitor C119.

A first terminal of the first capacitor C119 is connected to the switching module K04. A second terminal of the first capacitor C119 is connected to a first terminal of the first primary-side winding NP1161. A second terminal of the first primary-side winding NP1161 is connected to the second power input terminal IN2.

Optionally, the first resonant unit K103 may further include a first switch element Q118. The second terminal of the first primary-side winding NP1161 is connected to the second power input terminal IN2 through the first switch element Q118.

In this way, working status of the first resonant unit K103 can be controlled by controlling on/off status of the first switch element Q118. For example, when the first switch element Q118 is in an on state, the first resonant unit K103 is in a working state; or when the first switch element Q118 is in an off state, the first resonant unit K103 is in a non-working state.

Optionally, the first switch element Q118 may be a switch component such as a MOS transistor, a triode, a silicon controlled rectifier, or a relay.

Optionally, the charger may further include: a first charging interface (for example, a USB port K214 in FIG. 2); a capacitor C115, disposed between the first power input terminal IN1 and the second power input terminal IN2; a power control module K114, separately connected to the switching module K04 and the first resonant unit K103; switching transistors Q211 and Q212, disposed on a secondary side of the transformer and connected to the secondary-side winding NS1162; a synchronous rectification control module K215, connected to Q211 and Q212; a protocol control module K216, connected to the synchronous rectification control module K215 and the first charging interface; and a feedback module K117, connected to the protocol control module K216 and the power control module K114.

A working process of the charger is described below with reference to the schematic diagram of the circuit structure of the charger shown in FIG. 2.

After the charger is powered on, the power control module K114 controls the first resonant unit K113 to be effectively turned on, and controls on/off status of Q111 and Q112, so that the transformer is enabled to output a voltage. In addition, the power control module K114 controls Q111 and Q112 to be switched on and off alternatively, so that a resonant topology can be formed in a charging circuit. This can reduce loss and improve charging efficiency.

After the protocol control module K216 is powered on, the feedback module K117 and a primary-side circuit jointly control a power supply to output a default voltage V0. The protocol control module K216 can adjust an output voltage V in a voltage range from V0 to V1.

When an electrical device (for example, a mobile phone) is connected to the charger through the USB port K214, the electrical device may transmit request information for requesting a voltage VP (which may be understood as a charging voltage required by the electrical device) to the protocol control module K216; and the protocol control module K216 requests, through the feedback module K117, the power control module K114 to output the voltage VP.

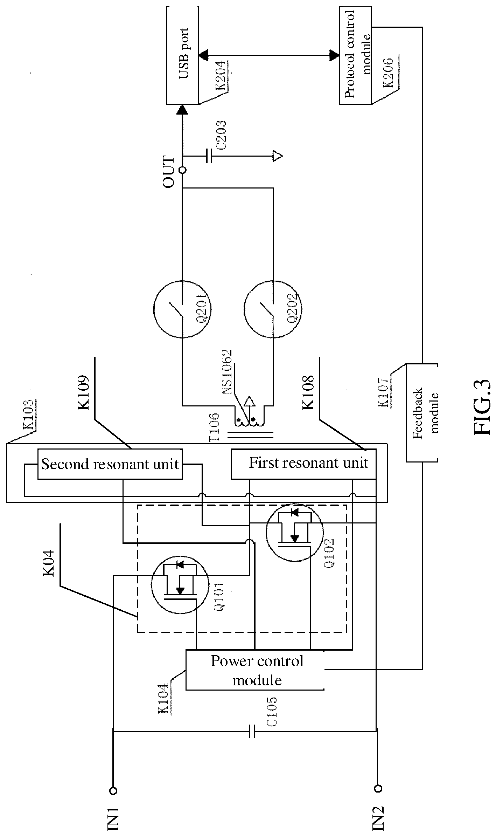

According to the invention and as shown in FIG. 3, the charger includes: a first power input terminal IN1, a second power input terminal IN2, a power output terminal OUT, a switching module K04, and a transformer T106.

The switching module K04 is separately connected to the first power input terminal IN1 and the second power input terminal IN2. A primary side of the transformer T106 is provided with a resonant module K103. A secondary-side winding NS1062 of the transformer T106 is connected to the power output terminal OUT.

The resonant module K103 includes a first resonant unit K108 and a second resonant unit K109. The first resonant unit K108 is connected to the switching module K04. The second resonant unit K109 is connected to the switching module K04. When the first resonant unit K108 is in a working state, the second resonant unit K109 is in a non-working state; or when the first resonant unit K108 is in a non-working state, the second resonant unit K109 is in a working state.

The switching module K04 can switch between a first on state and a second on state. When the first resonant unit K108 is in the working state, if the switching module K04 is in the first on state, input power at the first power input terminal IN1 is coupled to the secondary-side winding NS1062 through the first resonant unit K108 and is output through the power output terminal OUT; or if the switching module K04 is in the second on state, power discharged by the first resonant unit K108 is transmitted to the first power input terminal IN1 through the second power input terminal IN2.

When the second resonant unit K109 is in the working state, if the switching module K04 is in the first on state, the input power at the first power input terminal IN1 is coupled to the secondary-side winding NS1062 through the second resonant unit K109 and is output through the power output terminal OUT; or if the switching module K04 is in the second on state, power discharged by the second resonant unit K109 is transmitted to the first power input terminal IN1 through the second power input terminal IN2.

Therefore, when any one of the first resonant unit K108 and the second resonant unit K109 is in the working state, a resonant topology can be formed in a charging circuit by alternately switching the switching module K04 between the first on state and the second on state. This can reduce loss and improve charging efficiency.

Optionally, when a required voltage fed back by an electrical device is in a range from a first voltage V1 to a second voltage V2, the first resonant unit K108 is in the working state, and the second resonant unit K109 is in the non-working state; or when the required voltage is in a range from a third voltage V3 to a fourth voltage V4, the first resonant unit K108 is in the non-working state, and the second resonant unit K109 is in the working state, where V3 is greater than V1, and V4 is greater than V2.

For example: a first voltage range is from V1 to V2; and a second voltage range is from V3 to V4. V3 is greater than V1, V4 is greater than V2, and V3 is less than V2. In other words, a voltage return difference may be set between the first voltage range and the second voltage range, to avoid frequent switching of the switching module. Alternatively, V3 is greater than V1, V4 is greater than V2, and V3 is greater than or equal to V2. In this case, a total output voltage range of the charger is a combination of the first voltage range (V1 to V2) and the second voltage range (V3 to V4), so that a wide output voltage range is obtained. Quantities of turns of primary-side windings in different resonant units may be set according to corresponding output voltage ranges.

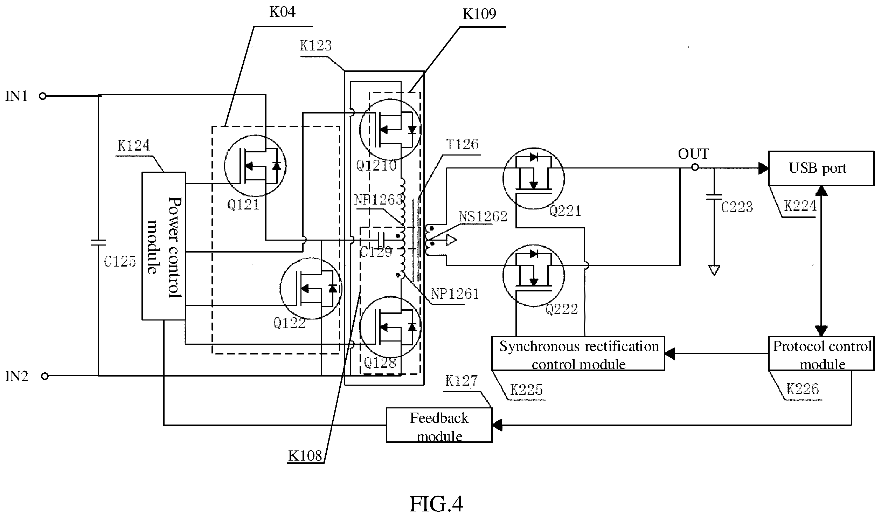

Optionally, as shown in FIG. 4, the first resonant unit K108 may include a first switch element Q128, and the second resonant unit K109 may include a second switch element Q1210.

The charger may further include a power control module K124. The power control module K124 is separately connected to the first switch element Q128 and the second switch element Q1210.

The power control module K124 is configured to: control one of the first switch element Q128 and the second switch element Q1210 to be in an on state and control the other one to be in an off state. When the first switch element Q128 is in the on state, the first resonant unit K108 is in the working state, and the second resonant unit K109 is in the non-working state; or when the second switch element Q1210 is in the on state, the second resonant unit K109 is in the working state, and the first resonant unit K108 is in the non-working state.

In this way, working status of the first resonant unit K108 and the second resonant unit K109 can be controlled by controlling on/off status of the first switch element Q128 and the second switch element Q1210. For example, when the first switch element Q128 is in the on state, the first resonant unit K108 is in the working state; or when the first switch element Q128 is in the off state, the first resonant unit K108 is in the non-working state. When the second switch element Q1210 is in the on state, the second resonant unit K109 is in the working state; or when the second switch element Q1210 is in the off state, the second resonant unit K109 is in the non-working state.

Optionally, the first switch element Q128 may be a switch component such as a MOS transistor, a triode, a silicon controlled rectifier, or a relay; and the second switch element Q1210 may be a switch component such as a MOS transistor, a triode, a silicon controlled rectifier, or a relay.

Optionally, when the charger charges an electrical device, the power control module K124 is configured to obtain a required voltage fed back by the electrical device. When the required voltage is in a range from a first voltage V1 to a second voltage V2, the power control module K124 controls the first switch element Q128 to be in the on state, and controls the second switch element Q1210 to be in the off state; or when the required voltage is in a range from a third voltage V3 to a fourth voltage V4, the power control module K124 controls the first switch element Q128 to be in the off state, and controls the second switch element Q1210 to be in the on state, where V3 is greater than V1, and V4 is greater than V2. Specifically, for a relationship between the voltage range V1 to V2 and the voltage range V3 to V4, reference may be made to the foregoing embodiment. To avoid repetition, details are not described herein again.

Optionally, the charger may further include: a first charging interface (for example, a USB port K224 in FIG. 4) and a protocol control module K226. The first charging interface is connected to the power output terminal OUT. The protocol control module K226 is separately connected to the first charging interface and the power control module K124.

In a case that the first charging interface is connected to a second charging interface of the electrical device, the protocol control module K226 obtains the required voltage fed back by the electrical device, and feeds back the required voltage to the power control module K124.

In this way, due to a coordinated function of the power control module K124 and the protocol control module K226, the charger can output voltages meeting different charging requirements, thereby improving charging applicability.

Optionally, the first resonant unit K108 further includes a first primary-side winding NP1261 and a first capacitor C129, and the second resonant unit K109 further includes a second primary-side winding NP1263.

A first terminal of the first capacitor C129 is connected to the switching module K04. A second terminal of the first capacitor C129 is separately connected to a first terminal of the first primary-side winding NP1261 and a first terminal of the second primary-side winding NP1263. A second terminal of the first primary-side winding NP1261 is connected to the second power input terminal IN2 through the first switch element Q128. A second terminal of the second primary-side winding NP1263 is connected to the second power input terminal IN2 through the second switch element Q1210.

Optionally, the charger may further include: a capacitor C125, disposed between the first power input terminal IN1 and the second power input terminal IN2; switching transistors Q221 and Q222, disposed on a secondary side of the transformer and connected to the secondary-side winding NS1262; a synchronous rectification control module K225, connected to Q221 and Q222; and a feedback module K127, connected to the protocol control module K226 and the power control module K124.

A working process of the charger is described below with reference to the schematic diagram of the circuit structure of the charger shown in FIG. 4.

After the charger is powered on, the power control module K114 controls a resonant module K123 to be effectively turned on, and controls on/off status of Q121 and Q122, so that the transformer is enabled to output a voltage. In addition, the power control module K124 controls Q121 and Q122 to be switched on and off alternatively, so that a resonant topology can be formed in a charging circuit. This can reduce loss and improve charging efficiency.

After the protocol control module K226 is powered on, the feedback module K127 and a primary-side circuit jointly control a power supply to output a default voltage V0. The protocol control module K226 can adjust an output voltage V in a voltage range from V0 to V1.

When an electrical device (for example, a mobile phone) is connected to the charger through the USB port K224, the electrical device transmits request information for requesting a voltage VP (which may be understood as a charging voltage required by the electrical device) to the protocol control module K226; and the protocol control module K226 requests, through the feedback module K127, the power control module K124 to output the voltage VP.

If the voltage VP requested by the electrical device exceeds a voltage range 1 (V0 to V1) of an output voltage V, the first resonant unit K108 of the resonant module K123 is turned off, and the second resonant unit K109 is used for working; and after switching is performed to the second resonant unit K 109 for working, a voltage range 2 of the output voltage V is from V1 to V2.

In this case, the voltage range 1 plus the voltage range 2 equals a total output voltage range of the charger, so that a wide output voltage range (V0 to V2) is obtained.

A specific working process is as follows.

After the charger is powered on, the power control module K124 controls Q128 to be in the on state, controls Q1210 to be in the off state, and controls the switching transistors Q121 and Q122 to be in the on state and the off state alternately during work. In this case, C129, NP1261, and Q128 constitute a first resonant unit K108 in a working state. NP1263 and a junction capacitor of Q1210 are combined to form a non-working resonant cavity that is used as a shielded winding to absorb interference. The charger outputs the voltage V0 by default.

After the charger is connected to the electrical device, the protocol control module K226 communicates with the electrical device through the USB port K224, and feeds back a corresponding signal to the power control module K124 based on the request of the electrical device, thereby requesting the voltage VP meeting the request of the electric device. The power control module K124 is provided with a preset voltage range. A resonant unit for working is selected based on the voltage VP requested by the electrical device.

When the requested voltage meets the following condition: V0 ≤ voltage VP ≤ V1, the first resonant unit K108 is controlled to be in the working state. When the requested voltage meets the following condition: V1 < voltage VP ≤ V2, a second resonant cavity unit K109 is controlled to be in a working state.

When the second resonant cavity unit K109 is in the working state, the power control module K124 controls Q128 to be in the off state, controls Q1210 to be in the on state, and controls the switching transistors Q121 and Q122 to be in the on state and the off state alternately during work. In this case, C129, NP1263, and Q1210 constitute the second resonant cavity unit K109 in the working state. NP1261 and a junction capacitor of Q128 are combined to form a non-working resonant cavity that is used as a shielded winding to absorb interference.

Optionally, a voltage return difference AV may also be set between the voltage range 1 and the voltage range 2. For example, when a voltage is adjusted and increased from the voltage range 1 (V0 to V1) to the voltage range 2 (V1 to V2), switching starts only when the voltage becomes greater than V1+1/2 × ΔV; or when the voltage is adjusted and decreased from the voltage range 2 (V1 to V2) to the voltage range 1 (V0 to V1), switching starts only when the voltage becomes greater than V1-1/2 × ΔV. In this way, a problem that the switching module K04 switches frequently at a threshold voltage can be avoided.

According to the foregoing solution, outputting of different voltages is controlled by controlling use of different resonant units, and a plurality of voltages constitute a wide output voltage range, thereby broadening a voltage range of resonant half-bridge output voltages. Therefore, this embodiment can be applied to a charger with a wide output voltage range, and is characterized in that there is nearly no energy loss. This implements a power supply design with an efficient and wide output voltage range.

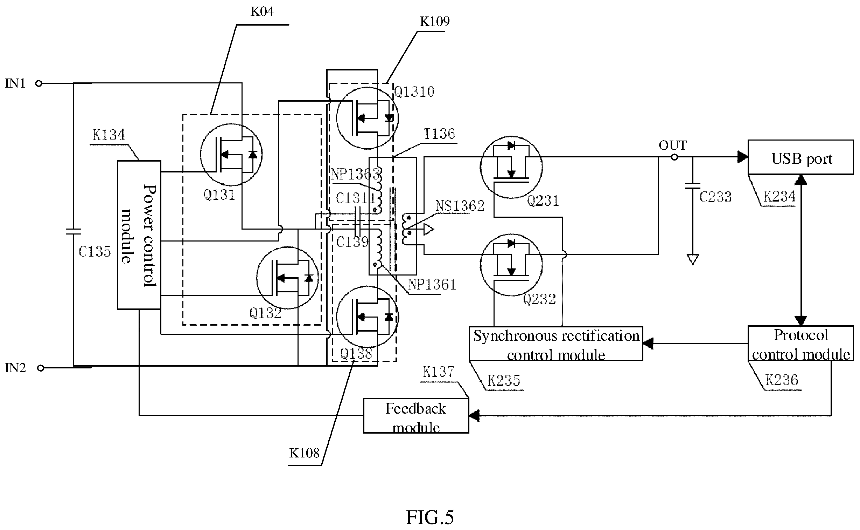

Optionally, as shown in FIG. 5, the first resonant unit K108 may further include a first primary-side winding NP1361 and a first capacitor C139.

A first terminal of the first capacitor C139 is connected to the switching module K04. A second terminal of the first capacitor C139 is connected to a first terminal of the first primary-side winding NP1361. A second terminal of the first primary-side winding NP1361 is connected to the second power input terminal IN2 through the first switch element Q138.

Optionally, the second resonant unit K109 further includes a second primary-side winding NP1363 and a second capacitor C1311.

A first terminal of the second capacitor C1311 is connected to the switching module K04. A second terminal of the second capacitor C1311 is connected to a first terminal of the second primary-side winding NP1363. A second terminal of the second primary-side winding NP1363 is connected to the second power input terminal IN2 through the second switch element Q1310.

In this embodiment, the first resonant unit K108 and the second resonant unit K109 are independent of each other, that is, the first resonant unit K108 has the first primary-side winding NP1361 and the first capacitor C139 that are independent, and the second resonant unit K109 has the second primary-side winding NP1363 and the second capacitor C1311 that are independent. This can reduce difficulty of selecting a capacitor from a resonant unit, thus making a design simpler.

Moreover, in this embodiment, other structures different from the specific structures of the first resonant unit K108 and the second resonant unit K109 as well as corresponding working principles are similar to the foregoing embodiments. To avoid repetition, details are not described herein again.

It should be noted that although this embodiment provides an example in which two resonant units are used, it should be understood that a quantity of resonant units may be extended to a larger number, so that in addition to higher efficiency, the charger also has a wider output voltage range. Embodiments of this invention are not limited thereto, but only to the scope of the invention as claimed.

It should be noted that the embodiments of this invention can be applied to similar power supply devices, so that a power supply can have an efficient and wide output voltage range. This invention is not limited thereto, but only to the scope of the invention as claimed.

The embodiments in this specification are described in a progressive manner. Each embodiment focuses on a difference from another embodiment. For same or similar parts in the embodiments, refer to each other.

Although preferred embodiments of this invention have been described, those skilled in the art may make additional changes and modifications to these embodiments once they learn the basic inventive concept. Therefore, the appended claims are intended to be interpreted as including the preferred embodiments and all changes and modifications that fall within the scope of the embodiments of this invention, as long as they fall within the claimed scope.

Finally, it should be further noted that, in this specification, relationship terms such as first and second are only used to distinguish an entity or operation from another entity or operation, but do not necessarily require or imply that there is any actual relationship or order between these entities or operations. Moreover, the terms "include", "comprise", or any of their variants are intended to cover a non-exclusive inclusion, so that a process, a method, an article, or a terminal device that includes a list of elements not only includes those elements but also includes other elements that are not listed, or further includes elements inherent to such a process, method, article, or terminal device. Without further restrictions, an element defined by the statement "including a..." does not exclude the existence of another identical element in the process, method, article, or terminal device that includes the very element.

The above embodiments are preferred embodiments. It should be noted that, within the technical concept of this invention, those ordinarily skilled in the art can make various improvements and modifications, which shall all fall within the protective scope of this invention as long as they are covered by the claimed scope.

## Claims

1. A charger, **characterized by** comprising:
a first power input terminal (IN1), a second power input terminal (IN2), and a power output terminal (OUT);
a switching module (K04), wherein the switching module (K04) is separately connected to the first power input terminal (IN1) and the second power input terminal (IN2); and
a transformer (T106), wherein a primary side of the transformer (T106) is provided with a first resonant unit (K103), the first resonant unit (K108) is connected to the switching module (K04), and a secondary-side winding (NS1062) of the transformer (T106) is connected to the power output terminal (OUT), wherein
the switching module (K04) can switch between a first on state and a second on state, wherein when the switching module (K04) is in the first on state, input power at the first power input terminal (IN1) is coupled to the secondary-side winding (NS1062) through the first resonant unit (K108) and is output through the power output terminal (OUT); or when the switching module (K04) is in the second on state, power discharged by the first resonant unit (K108) is transmitted to the first power input terminal (IN1) through the second power input terminal (IN2), so that power discharged by the first resonant unit (K108) is coupled to the secondary-side winding (NS1062) through the first resonant unit (K108) and is output through the power output terminal (OUT); and
the charger further comprises:
a second resonant unit (K109), wherein the second resonant unit (K109) is connected to the switching module (K04); wherein
when the first resonant unit (K108) is in a working state, the second resonant unit (K109) is in a non-working state; or when the first resonant unit (K108) is in a non-working state, the second resonant unit (K109) is in a working state; and when the switching module (K04) is in the first on state, the input power at the first power input terminal (IN1) is coupled to the secondary-side winding (NS1062) through the second resonant unit (K109) and is output through the power output terminal (OUT); or when the switching module (K04) is in the second on state, power discharged by the second resonant unit (K109) is transmitted to the first power input terminal (IN1) through the second power input terminal (IN2).

2. The charger according to claim 1, wherein the switching module (K04) comprises:
a first switch unit (Q101) and a second switch unit (Q102), wherein a first terminal of the first switch unit (Q101) is connected to the first power input terminal (IN1), a second terminal of the first switch unit (Q101) is separately connected to a first terminal of the second switch unit (Q102) and a first terminal of the first resonant unit (K108), and both a second terminal of the second switch unit (Q102) and a second terminal of the first resonant unit (K108) are connected to the second power input terminal (IN2); wherein
when the switching module (K04) is in the first on state, the first switch unit (Q101) is in an on state, and the second switch unit (Q102) is in an off state; or when the switching module (K04) is in the second on state, the first switch unit (Q101) is in an off state, and the second switch unit (Q102) is in an on state.

3. The charger according to claim 1, wherein the first resonant unit (K108) comprises a first switch element (Q128), and the second resonant unit (K109) comprises a second switch element (Q1210);
the charger further comprises a power control module (K124), wherein the power control module (K124) is separately connected to the first switch element (Q128) and the second switch element (Q1210); and
the power control module (K124) is configured to: control one of the first switch element (Q128) and the second switch element (Q1210) to be in an on state and control the other one to be in an off state, wherein when the first switch element (Q128) is in the on state, the first resonant unit (K108) is in the working state, and the second resonant unit (K109) is in the non-working state; or when the second switch element (Q1210) is in the on state, the second resonant unit (K109) is in the working state, and the first resonant unit (K108) is in the non-working state.

4. The charger according to claim 3, wherein when the charger charges an electrical device, the power control module (K124) is configured to obtain a required voltage fed back by the electrical device; and
when the required voltage is in a range from a first voltage V1 to a second voltage V2, the power control module (K124) controls the first switch element (Q128) to be in the on state, and controls the second switch element (Q1210) to be in the off state; or when the required voltage is in a range from a third voltage V3 to a fourth voltage V4, the power control module (K124) controls the first switch element (Q128) to be in the off state, and controls the second switch element (Q1210) to be in the on state, wherein V3 is greater than V1, and V4 is greater than V2.

5. The charger according to claim 4, wherein the charger further comprises:
a first charging interface (K224), wherein the first charging interface (K224) is connected to the power output terminal (OUT); and
a protocol control module (K226), wherein the protocol control module (K226) is separately connected to the first charging interface (K224) and the power control module (K124), wherein
in a case that the first charging interface (K224) is connected to a second charging interface of the electrical device, the protocol control module (K226) obtains the required voltage fed back by the electrical device, and feeds back the required voltage to the power control module (K124).

6. The charger according to claim 5, wherein the first resonant unit (K108) further comprises a first primary-side winding (NP1261) and a first capacitor (C129); and
a first terminal of the first capacitor (C129) is connected to the switching module (K04), a second terminal of the first capacitor (C129) is connected to a first terminal of the first primary-side winding (NP1261), and a second terminal of the first primary-side winding (NP1261) is connected to the second power input terminal (IN2) through the first switch element (Q128).

7. The charger according to claim 3, wherein the second resonant unit (K109) further comprises a second primary-side winding (NP1363) and a second capacitor (C1311); and
a first terminal of the second capacitor (C1311) is connected to the switching module (K04), a second terminal of the second capacitor (C1311) is connected to a first terminal of the second primary-side winding (NP1363), and a second terminal of the second primary-side winding (NP1363) is connected to the second power input terminal (IN2) through the second switch element (Q1210).

8. The charger according to claim 3, wherein the first resonant unit (K108) further comprises a first primary-side winding (NP1261) and a first capacitor (C129), and the second resonant unit (K109) further comprises a second primary-side winding (NP1263), wherein
a first terminal of the first capacitor (C129) is connected to the switching module (K04), a second terminal of the first capacitor (C129) is separately connected to a first terminal of the first primary-side winding (NP1261) and a first terminal of the second primary-side winding (NP1263), a second terminal of the first primary-side winding (NP1261) is connected to the second power input terminal (IN2) through the first switch element (Q128), and a second terminal of the second primary-side winding (NP1263) is connected to the second power input terminal (IN2) through the second switch element (Q1210).

9. The charger according to any one of claims 6 to 8, wherein the first switch element (Q128) is a switching transistor, and the second switch element (Q1210) is a switching transistor.

## Patentansprüche

1. Ein Ladegerät, **dadurch gekennzeichnet, dass** es Folgendes beinhaltet:
einen ersten Leistungseingangsanschluss (IN1), einen zweiten Leistungseingangsanschluss (IN2) und einen Leistungsausgangsanschluss (OUT);
ein Schaltmodul (K04), wobei das Schaltmodul (K04) separat mit dem ersten Leistungseingangsanschluss (IN1) und dem zweiten Leistungseingangsanschluss (IN2) verbunden ist; und
einen Transformator (T106), wobei eine Primärseite des Transformators (T106) mit einer ersten Resonanzeinheit (K103) versehen ist, die erste Resonanzeinheit (K108) mit dem Schaltmodul (K04) verbunden ist und eine sekundärseitige Wicklung (NS1062) des Transformators (T106) mit dem Leistungsausgangsanschluss (OUT) verbunden ist, wobei
das Schaltmodul (K04) zwischen einem ersten Ein-Zustand und einem zweiten Ein-Zustand umschalten kann, wobei, wenn sich das Schaltmodul (K04) in dem ersten Ein-Zustand befindet, Eingangsleistung an dem ersten Leistungseingangsanschluss (IN1) über die erste Resonanzeinheit (K108) an die sekundärseitige Wicklung (NS1062) gekoppelt und über den Leistungsausgangsanschluss (OUT) ausgegeben wird; oder
wenn sich das Schaltmodul (K04) im zweiten Ein-Zustand befindet, von der ersten Resonanzeinheit (K108) entladene Leistung über den zweiten Leistungseingangsanschluss (IN2) an den ersten Leistungseingangsanschluss (IN1) übertragen wird, sodass von der ersten Resonanzeinheit (K108) entladene Leistung über die erste Resonanzeinheit (K108) an die sekundärseitige Wicklung (NS1062) gekoppelt und über den Leistungsausgangsanschluss (OUT) ausgegeben wird; und
das Ladegerät ferner Folgendes beinhaltet:
eine zweite Resonanzeinheit (K109), wobei die zweite Resonanzeinheit (K109) mit dem Schaltmodul (K04) verbunden ist; wobei
wenn sich die erste Resonanzeinheit (K108) in einem Betriebszustand befindet, sich die zweite Resonanzeinheit (K109) in einem Nichtbetriebszustand befindet; oder wenn sich die erste Resonanzeinheit (K108) in einem Nichtbetriebszustand befindet, sich die zweite Resonanzeinheit (K109) in einem Betriebszustand befindet; und wenn sich das Schaltmodul (K04) im ersten Ein-Zustand befindet, die Eingangsleistung an dem ersten Leistungseingangsanschluss (IN1) über die zweite Resonanzeinheit (K109) an die sekundärseitige Wicklung (NS1062) gekoppelt und über den
Leistungsausgangsanschluss (OUT) ausgegeben wird; oder wenn sich das Schaltmodul (K04) im zweiten Ein-Zustand befindet, von der zweiten Resonanzeinheit (K109) entladene Leistung über den zweiten Leistungseingangsanschluss (IN2) an den ersten Leistungseingangsanschluss (IN1) übertragen wird.

2. Ladegerät gemäß Anspruch 1, wobei das Schaltmodul (K04) Folgendes beinhaltet:
eine erste Schalteinheit (Q101) und eine zweite Schalteinheit (Q102), wobei ein erster Anschluss der ersten Schalteinheit (Q101) mit dem ersten Leistungseingangsanschluss (IN1) verbunden ist, ein zweiter Anschluss der ersten Schalteinheit (Q101) separat mit einem ersten Anschluss der zweiten Schalteinheit (Q102) und einem ersten Anschluss der ersten Resonanzeinheit (K108) verbunden ist und sowohl ein zweiter Anschluss der zweiten Schalteinheit (Q102) als auch ein zweiter Anschluss der ersten Resonanzeinheit (K108) mit dem zweiten Leistungseingangsanschluss (IN2) verbunden sind; wobei
wenn sich das Schaltmodul (K04) im ersten Ein-Zustand befindet, sich die erste Schalteinheit (Q101) in einem Ein-Zustand befindet und sich die zweite Schalteinheit (Q102) in einem Aus-Zustand befindet; oder wenn sich das Schaltmodul (K04) in dem zweiten Ein-Zustand befindet, sich die erste Schalteinheit (Q101) in einem Aus-Zustand befindet und sich die zweite Schalteinheit (Q102) in einem Ein-Zustand befindet.

3. Ladegerät gemäß Anspruch 1, wobei die erste Resonanzeinheit (K108) ein erstes Schaltelement (Q128) beinhaltet und die zweite Resonanzeinheit (K109) ein zweites Schaltelement (Q1210) beinhaltet;
das Ladegerät ferner ein Leistungssteuermodul (K124) beinhaltet, wobei das Leistungssteuermodul (K124) separat mit dem ersten Schaltelement (Q128) und dem zweiten Schaltelement (Q1210) verbunden ist; und
das Leistungssteuermodul (K124) für Folgendes konfiguriert ist: Steuern eines von dem ersten Schaltelement (Q128) und dem zweiten Schaltelement (Q1210), um sich in einem Ein-Zustand zu befinden, und Steuern des anderen, um sich in einem Aus-Zustand zu befinden, wobei, wenn sich das erste Schaltelement (Q128) in dem Ein-Zustand befindet, sich die erste Resonanzeinheit (K108) in dem Betriebszustand befindet und sich die zweite Resonanzeinheit (K109) in dem Nichtbetriebszustand befindet; oder wenn sich das zweite Schaltelement (Q1210) in dem Ein-Zustand befindet, sich die zweite Resonanzeinheit (K109) in dem Betriebszustand befindet und sich die erste Resonanzeinheit (K108) in dem Nichtbetriebszustand befindet.

4. Ladegerät gemäß Anspruch 3, wobei, wenn das Ladegerät eine elektrische Vorrichtung lädt, das Leistungssteuermodul (K124) konfiguriert ist, um eine von der elektrischen Vorrichtung rückgekoppelte erforderliche Spannung zu erhalten; und
wenn die erforderliche Spannung in einem Bereich von einer ersten Spannung V1 bis einer zweiten Spannung V2 liegt, das Leistungssteuermodul (K124) das erste Schaltelement (Q128) steuert, um sich in dem Ein-Zustand zu befinden, und das zweite Schaltelement (Q1210) steuert, um sich in dem Aus-Zustand zu befinden; oder wenn die erforderliche Spannung in einem Bereich von einer dritten Spannung V3 bis einer vierten Spannung V4 liegt, das Leistungssteuermodul (K124) das erste Schaltelement (Q128) steuert, um sich in dem Aus-Zustand zu befinden, und das zweite Schaltelement (Q1210) steuert, um sich in dem Ein-Zustand zu befinden, wobei V3 größer als V1 ist und V4 größer als V2 ist.

5. Ladegerät gemäß Anspruch 4, wobei das Ladegerät ferner Folgendes beinhaltet:
eine erste Ladeschnittstelle (K224), wobei die erste Ladeschnittstelle (K224) mit dem Leistungsausgangsanschluss (OUT) verbunden ist; und
ein Protokollsteuermodul (K226), wobei das Protokollsteuermodul (K226) separat mit der ersten Ladeschnittstelle (K224) und dem Leistungssteuermodul (K124) verbunden ist, wobei
in einem Fall, in dem die erste Ladeschnittstelle (K224) mit einer zweiten Ladeschnittstelle der elektrischen Vorrichtung verbunden ist, das Protokollsteuermodul (K226) die von der elektrischen Vorrichtung rückgekoppelte erforderliche Spannung erhält, die, und die erforderliche Spannung an das Leistungssteuermodul (K124) rückkoppelt.

6. Ladegerät gemäß Anspruch 5, wobei die erste Resonanzeinheit (K108) ferner eine erste primärseitige Wicklung (NP1261) und einen ersten Kondensator (C129) beinhaltet; und
ein erster Anschluss des ersten Kondensators (C129) mit dem Schaltmodul (K04) verbunden ist, ein zweiter Anschluss des ersten Kondensators (C129) mit einem ersten Anschluss der ersten primärseitigen Wicklung (NP1261) verbunden ist und ein zweiter Anschluss der ersten primärseitigen Wicklung (NP1261) über das erste Schaltelement (Q128) mit dem zweiten Leistungseingangsanschluss (IN2) verbunden ist.

7. Ladegerät gemäß Anspruch 3, wobei die zweite Resonanzeinheit (K109) ferner eine zweite primärseitige Wicklung (NP1363) und einen zweiten Kondensator (C1311) beinhaltet; und
ein erster Anschluss des zweiten Kondensators (C1311) mit dem Schaltmodul (K04) verbunden ist, ein zweiter Anschluss des zweiten Kondensators (C1311) mit einem ersten Anschluss der zweiten primärseitigen Wicklung (NP1363) verbunden ist und ein zweiter Anschluss der zweiten primärseitigen Wicklung (NP1363) über das zweite Schaltelement (Q1210) mit dem zweiten Leistungseingangsanschluss (IN2) verbunden ist.

8. Ladegerät gemäß Anspruch 3, wobei die erste Resonanzeinheit (K108) ferner eine erste primärseitige Wicklung (NP1261) und einen ersten Kondensator (C129) beinhaltet und die zweite Resonanzeinheit (K109) ferner eine zweite primärseitige Wicklung (NP1263) beinhaltet, wobei
ein erster Anschluss des ersten Kondensators (C129) mit dem Schaltmodul (K04) verbunden ist, ein zweiter Anschluss des ersten Kondensators (C129) separat mit einem ersten Anschluss der ersten primärseitigen Wicklung (NP1261) und einem ersten Anschluss der zweiten primärseitigen Wicklung (NP1263) verbunden ist, ein zweiter Anschluss der ersten primärseitigen Wicklung (NP1261) über das erste Schaltelement (Q128) mit dem zweiten Leistungseingangsanschluss (IN2) verbunden ist und ein zweiter Anschluss der zweiten primärseitigen Wicklung (NP1263) über das zweite Schaltelement (Q1210) mit dem zweiten Leistungseingangsanschluss (IN2) verbunden ist.

9. Ladegerät gemäß einem der Ansprüche 6 bis 8, wobei das erste Schaltelement (Q128) ein Schalttransistor ist und das zweite Schaltelement (Q1210) ein Schalttransistor ist.

## Revendications

1. Un chargeur, **caractérisé en ce qu'**il comprend :
une première borne d'entrée de puissance (IN1), une deuxième borne d'entrée de puissance (IN2), et une borne de sortie de puissance (OUT) ;
un module de commutation (K04), où le module de commutation (K04) est connecté séparément à la première borne d'entrée de puissance (IN1) et à la deuxième borne d'entrée de puissance (IN2) ; et
un transformateur (T106), où un côté primaire du transformateur (T106) est pourvu d'une première unité résonante (K103), la première unité résonante (K108) est connectée au module de commutation (K04), et un enroulement côté secondaire (NS1062) du transformateur (T106) est connecté à la borne de sortie de puissance (OUT), où
le module de commutation (K04) peut commuter entre un premier état de marche et un deuxième état de marche, où lorsque le module de commutation (K04) est dans le premier état de marche, la puissance d'entrée au niveau de la première borne d'entrée de puissance (IN1) est couplée à l'enroulement côté secondaire (NS1062) par l'intermédiaire de la première unité résonante (K108) et est délivrée en sortie par l'intermédiaire de la borne de sortie de puissance (OUT) ; ou lorsque le module de commutation (K04) est dans le deuxième état de marche, la puissance déchargée par la première unité résonante (K108) est transmise à la première borne d'entrée de puissance (IN1) par l'intermédiaire de la deuxième borne d'entrée de puissance (IN2), de sorte que la puissance déchargée par la première unité résonante (K108) est couplée à l'enroulement côté secondaire (NS1062) par l'intermédiaire de la première unité résonante (K108) et est délivrée en sortie par l'intermédiaire de la borne de sortie de puissance (OUT) ; et
le chargeur comprend en outre :
une deuxième unité résonante (K109), où la deuxième unité résonante (K109) est connectée au module de commutation (K04) ; où
lorsque la première unité résonante (K108) est dans un état de fonctionnement, la deuxième unité résonante (K109) est dans un état de non-fonctionnement ; ou lorsque la première unité résonante (K108) est dans un état de non-fonctionnement, la deuxième unité résonante (K109) est dans un état de fonctionnement ; et lorsque le module de commutation (K04) est dans le premier état de marche, la puissance d'entrée au niveau de la première borne d'entrée de puissance (IN1) est couplée à l'enroulement côté secondaire (NS1062) par l'intermédiaire de la deuxième unité résonante (K109) et est délivrée en sortie par l'intermédiaire de la borne de sortie de puissance (OUT) ; ou lorsque le module de commutation (K04) est dans le deuxième état de marche, la puissance déchargée par la deuxième unité résonante (K109) est transmise à la première borne d'entrée de puissance (IN1) par l'intermédiaire de la deuxième borne d'entrée de puissance (IN2).

2. Le chargeur selon la revendication 1, où le module de commutation (K04) comprend : une première unité de commutateur (Q101) et une deuxième unité de commutateur (Q102), où une première borne de la première unité de commutateur (Q101) est connectée à la première borne d'entrée de puissance (IN1), une deuxième borne de la première unité de commutateur (Q101) est connectée séparément à une première borne de la deuxième unité de commutateur (Q102) et à une première borne de la première unité résonante (K108), et tant une deuxième borne de la deuxième unité de commutateur (Q102) qu'une deuxième borne de la première unité résonante (K108) sont connectées à la deuxième borne d'entrée de puissance (IN2) ; où lorsque le module de commutation (K04) est dans le premier état de marche, la première unité de commutateur (Q101) est dans un état de marche, et la deuxième unité de commutateur (Q102) est dans un état d'arrêt ; ou lorsque le module de commutation (K04) est dans le deuxième état de marche, la première unité de commutateur (Q101) est dans un état d'arrêt, et la deuxième unité de commutateur (Q102) est dans un état de marche.

3. Le chargeur selon la revendication 1, où la première unité résonante (K108) comprend un premier élément de commutateur (Q128), et la deuxième unité résonante (K109) comprend un deuxième élément de commutateur (Q1210) ;
le chargeur comprend en outre un module de commande de puissance (K124), où le module de commande de puissance (K124) est connecté séparément au premier élément de commutateur (Q128) et au deuxième élément de commutateur (Q1210) ; et le module de commande de puissance (K124) est configuré pour : commander un élément parmi le premier élément de commutateur (Q128) et le deuxième élément de commutateur (Q1210) pour qu'il soit dans un état de marche et commander l'autre élément pour qu'il soit dans un état d'arrêt, où lorsque le premier élément de commutateur (Q128) est dans l'état de marche, la première unité résonante (K108) est dans l'état de fonctionnement, et la deuxième unité résonante (K109) est dans l'état de non-fonctionnement ; ou lorsque le deuxième élément de commutateur (Q1210) est dans l'état de marche, la deuxième unité résonante (K109) est dans l'état de fonctionnement, et la première unité résonante (K108) est dans l'état de non-fonctionnement.

4. Le chargeur selon la revendication 3, où lorsque le chargeur charge un dispositif électrique, le module de commande de puissance (K124) est configuré pour obtenir une tension requise réintroduite par le dispositif électrique ; et
lorsque la tension requise est dans une plage allant d'une première tension V1 à une deuxième tension V2, le module de commande de puissance (K124) commande le premier élément de commutateur (Q128) pour qu'il soit dans l'état de marche, et commande le deuxième élément de commutateur (Q1210) pour qu'il soit dans l'état d'arrêt ; ou lorsque la tension requise est dans une plage allant d'une troisième tension V3 à une quatrième tension V4, le module de commande de puissance (K124) commande le premier élément de commutateur (Q128) pour qu'il soit dans l'état d'arrêt, et commande le deuxième élément de commutateur (Q1210) pour qu'il soit dans l'état de marche, où V3 est supérieure à V1, et V4 est supérieure à V2.

5. Le chargeur selon la revendication 4, où le chargeur comprend en outre :
une première interface de charge (K224), où la première interface de charge (K224) est connectée à la borne de sortie de puissance (OUT) ; et
un module de commande de protocole (K226), où le module de commande de protocole (K226) est connecté séparément à la première interface de charge (K224) et au module de commande de puissance (K124), où
dans un cas dans lequel la première interface de charge (K224) est connectée à une deuxième interface de charge du dispositif électrique, le module de commande de protocole (K226) obtient la tension requise réintroduite par le dispositif électrique, et réintroduit la tension requise dans le module de commande de puissance (K124).

6. Le chargeur selon la revendication 5, où la première unité résonante (K108) comprend en outre un premier enroulement côté primaire (NP1261) et un premier condensateur (C129) ; et
une première borne du premier condensateur (C129) est connectée au module de commutation (K04), une deuxième borne du premier condensateur (C129) est connectée à une première borne du premier enroulement côté primaire (NP1261), et une deuxième borne du premier enroulement côté primaire (NP1261) est connectée à la deuxième borne d'entrée de puissance (IN2) par l'intermédiaire du premier élément de commutateur (Q128).

7. Le chargeur selon la revendication 3, où la deuxième unité résonante (K109) comprend en outre un deuxième enroulement côté primaire (NP1363) et un deuxième condensateur (C1311) ; et
une première borne du deuxième condensateur (C1311) est connectée au module de commutation (K04), une deuxième borne du deuxième condensateur (C1311) est connectée à une première borne du deuxième enroulement côté primaire (NP1363), et une deuxième borne du deuxième enroulement côté primaire (NP1363) est connectée à la deuxième borne d'entrée de puissance (IN2) par l'intermédiaire du deuxième élément de commutateur (Q1210).

8. Le chargeur selon la revendication 3, où la première unité résonante (K108) comprend en outre un premier enroulement côté primaire (NP1261) et un premier condensateur (C129), et la deuxième unité résonante (K109) comprend en outre un deuxième enroulement côté primaire (NP1263), où
une première borne du premier condensateur (C129) est connectée au module de commutation (K04), une deuxième borne du premier condensateur (C129) est connectée séparément à une première borne du premier enroulement côté primaire (NP1261) et à une première borne du deuxième enroulement côté primaire (NP1263), une deuxième borne du premier enroulement côté primaire (NP1261) est connectée à la deuxième borne d'entrée de puissance (IN2) par l'intermédiaire du premier élément de commutateur (Q128), et une deuxième borne du deuxième enroulement côté primaire (NP1263) est connectée à la deuxième borne d'entrée de puissance (IN2) par l'intermédiaire du deuxième élément de commutateur (Q1210).

9. Le chargeur selon l'une quelconque des revendications 6 à 8, où le premier élément de commutateur (Q128) est un transistor de commutation, et le deuxième élément de commutateur (Q1210) est un transistor de commutation.
